# EUROPÄISCHE PATENTSCHRIFT

(11) **EP 2 943 798 B1**
(45) Veröffentlichungstag und Bekanntmachung des Hinweises auf die Patenterteilung: **08.07.2020**
(21) Anmeldenummer: 13796005.0
(22) Anmeldetag: 22.11.2013
(51) Int. Cl.: G01P 1/00, G01P 1/02, G01P 3/488, G01D 11/24, G01D 11/30

(54) **SENSORVORRICHTUNG ZUR DREHZAHLMESSUNG AN EINEM RAD EINES FAHRZEUGS, BREMSANLAGE FÜR EIN FAHRZEUG UND FAHRZEUG DAMIT SOWIE VERWENDUNG DER SENSORVORRICHTUNG ZUR DREHZAHLMESSUNG AN EINEM RAD EINES FAHRZEUGS**
SENSOR DEVICE FOR SPEED MEASUREMENT ON A WHEEL OF A VEHICLE, BRAKE SYSTEM FOR A VEHICLE AND VEHICLE THEREWITH, AND USE OF THE SENSOR DEVICE FOR SPEED MEASUREMENT ON A WHEEL OF A VEHICLE
DISPOSITIF DE DÉTECTION SERVANT À MESURER LA VITESSE DE ROTATION D'UNE ROUE DE VÉHICULE, SYSTÈME DE FREINAGE DE VÉHICULE ET VÉHICULE ÉQUIPÉ DE CE DISPOSITIF, ET UTILISATION DU DISPOSITIF DE DÉTECTION POUR MESURER LA VITESSE DE ROTATION D'UNE ROUE DE VÉHICULE

(30) Priorität: 08.01.2013 DE 102013000204
(43) Veröffentlichungstag der Anmeldung: 18.11.2015
(73) Patentinhaber: WABCO GmbH, 30453 Hannover (DE)
(72) Erfinder: DALISDAS, Jürgen, 30627 Hannover (DE); GRÜNDKER, Oliver, 30900 Wedemark (DE); KOSS, Sebastian, 30559 Hannover (DE)
(74) Vertreter: Lauerwald, Jörg
(86) Internationale Anmeldenummer: PCT/EP2013/003526
(87) Internationale Veröffentlichungsnummer: WO 2014/108149

(56) Entgegenhaltungen:
- DE-A1- 2 539 141
- DE-A1- 3 229 207
- DE-A1- 3 919 109
- DE-A1- 10 116 509
- DE-A1-102004 062 087

## Beschreibung

Die Erfindung betrifft eine Sensorvorrichtung zur Drehzahlmessung an einem Rad eines Fahrzeugs, insbesondere Nutzfahrzeugs. Die Sensorvorrichtung weist einen Sensorträger mit einem in den Sensorträger integrierten Sensor auf, um für die Drehzahlmessung die Drehung eines mit dem Rad mitdrehenden Polrades zu sensieren, insbesondere abzutasten. Insbesondere betrifft die Erfindung einen Stabsensor, der einen Stab aufweist, wobei der Sensor in den Stab integriert ist.

Weiter betrifft die Erfindung eine Bremsanlage für ein Fahrzeug mit einer derartigen Sensorvorrichtung sowie ein Fahrzeug damit. Schließlich betrifft die Erfindung die Verwendung einer erfindungsgemäßen Sensorvorrichtung zur Drehzahlmessung an einem Rad eines Fahrzeugs.

Eine bekannte Sensorvorrichtung der eingangs genannten Art ist ein Stabsensor mit einem Stab, an dessen Sensorkopf ein passiver Sensor zum passiven Sensieren der Drehung des Polrades angeordnet ist. Dieser bekannte Stabsensor ist derart ausgebildet, dass der Stab mittels einer separaten Klemmbuchse in einer im Bereich des Rades angeordneten Halteöffnung, bspw. einem Loch oder einer Bohrung, in beliebiger Orientierung bezüglich Drehungen um seine Stabachse festgeklemmt werden kann. Hierzu wird zunächst die Klemmbuchse in die Halteöffnung eingeschoben. Nachfolgend wird der bekannte Stab bis zum Kontakt mit dem am Rad angeordneten und mit dem Rad mitdrehenden Polrad in die Klemmbuchse eingeschoben und mittels der Klemmbuchse in der Halteöffnung festgeklemmt. Der Stab bleibt dabei jedoch unter Aufwendung einer ausreichend großen Kraft verrückbar, insbesondere axial in der Halteöffnung verschiebbar. Durch Achslagerspiel, insbesondere in Kurvenfahrten eines Fahrzeugs, welches den Stabsensor und das Polrad als Teil einer Bremsanlage aufweist, kann deshalb das Polrad den Stabsensor axial in der Halteöffnung zurückdrücken, wobei der Stab jedoch zugleich mittels der Klemmbuchse in der Halteöffnung gehalten wird. Diese Art der Befestigung wirkt einer möglichen Beschädigung des Stabsensors entgegen.

DE3229207 offenbart eine Klemmbuchse für einen Stabsensor, welche mehrere achsparallele federnde Zungen aufweist. Die Zungen dienen zu reibschlüssigen Fixierung und Justierung des Sensors in einer Bohrung eines Halteteils. Der Mittelteil der Zungen ist verbreitert. Der Knickpunkt der nach außen gebogenen Zungen liegt zwischen ihrer breitesten Stelle und der Zungenspitze. Der Abstand a der Zungenspitze zum gegenüberliegenden Material der Klemmbuchse beträgt weniger als 0,5mm.

DE253914 offenbart eine lösbare Befestigungsanordnung eines elektrischen Meßgebers für die Winkelstellung einer Brennkraftmaschinen-Kurbelwelle, insbesondere eines OT-Meßgebers in oder an einem Teil der Brennkraftmaschine, das mit einer durchgehenden zylinderischen Öffnung versehen ist, die eine stirnseitige Anlagefläche und ein im Bereich der Öffnung ausgebildetes Befestigungsprofil aufweist, wobei der an der Öffnung anliegende und durch sie hindurchragende Meßgeber im Wirkungsbereich eines ihn berührungsfrei steuernden, mit der Kurbelwelle umlaufenden Markierungsteiles angeordnet ist.

DE10116509A1 offenbart einen selbsthaltenden Getriebesensor umfaßt ein Sensorgehäuse mit einem Haltering, der sich radial von dem Sensorgehäuse erstreckt. Wenn der selbsthaltende Getriebesensor in eine Bohrung in einem Getriebegehäuse eingesetzt wird, die einen Durchmesser aufweist, der geringfügig kleiner als der Durchmesser des Halteringes ist, tritt der Außenrand des Halteringes mit der Innenwand der Bohrung in Eingriff und hält den selbsthaltenden Getriebesensor fest an der Stelle. Somit sind keine Befestigungsträger, Befestigungsschrauben oder ähnliche Vorrichtungen mehr erforderlich.

DE3919109A1 offenbart einen Stabsensor, der mittels einer Klemmbuchse in einer Bohrung gegenüber einem Polrad im Abstand eines Luftspaltes festgehalten ist. Die Klemmbuchse hat ausgescherte Krallen, die dafür sorgen, dass sich der Stabsensor bei nicht voll wirksamer Klemmung nur in Richtung auf das Polrad verschieben kann. Der Stabsensor mit dem Polrad ist zur Anwendung bei blockiergeschützten Bremsanlagen von Kraftfahrzeugen bestimmt.

DE 10 2004 062 087 A1 offenbart eine Befestigungsvorrichtung eines Sensors. Diese umfasst ein Sensorgehäuse und ein Klemmelement welches sich zumindest in axialer Richtung seitlich entlang des Sensorgehäuses erstreckt und mit diesem kraftschlüssig verbunden ist

Nachteilig am Klemmen des Stabes des bekannten Stabsensors mittels der bekannten Klemmbuchse in der Halteöffnung ist der Aufwand und sind die Kosten der Herstellung und Montage.

Der Erfindung liegt daher die Aufgabe zugrunde, den Aufwand und die Kosten für die Drehzahlmessung an einem Rad eines Fahrzeugs zu verringern.

Die Erfindung löst diese Aufgabe mit einer Sensorvorrichtung nach Anspruch 1, mit einer Bremsanlage für ein Fahrzeug nach Anspruch 5, mit einem Fahrzeug nach Anspruch 6 und mit der Verwendung einer Sensorvorrichtung nach Anspruch 7.

Die erfindungsgemäße Sensorvorrichtung ist von der eingangs genannten Art, weist jedoch in den Sensorträger integrierte Klemmmittel auf. Insbesondere sind die Klemmmittel an einem Gehäuse bzw. an einer Hülle des Sensorträgers fixiert, wobei der in den Sensorträger integrierte Sensor vorzugsweise vollumfänglich vom Gehäuse umschlossen bzw. vollständig innerhalb des Gehäuses angeordnet ist. Das Gehäuse ist vorzugsweise ein Körper, der durch eine ausgehärtete Umspritzung des Sensors, bspw. mit einem Kunststoff, gebildet ist. Vorzugsweise sind die Klemmmittel nur partiell am Gehäuse angeordnet bzw. umschließen das Gehäuse nicht vollumfänglich. Die Sensorvorrichtung ist bzw. die Klemmmittel sind derart ausgebildet, dass der Sensorträger mittels der Klemmmittel für die Drehzahlmessung in der eingangs genannten Halteöffnung im Bereich des Rades verrückbar, axial verschiebbar, klemmbar ist und in beliebiger Orientierung bezüglich Drehungen um die Längsachse, insbesondere Stabachse, des Sensorträgers bzw. in beliebiger um die Längsachse, insbesondere Stabachse, des Sensorträgers verdrehbarer Orientierung klemmbar ist.

Der Sensorträger ist bei axial verschiebbarer Ausbildung ausschließlich axial verschiebbar klemmbar. Somit ist ein sicherer Halt in radialer Richtung gegeben. Der Sensorträger ist ferner derart klemmbar, dass der Sensorträger lediglich durch Überwindung einer zwischen dem Sensorträger, insbesondere den Klemmmitteln, und der Halteöffnung axial wirkenden Haftreibkraft in der Halteöffnung verschoben werden kann. Die Halteöffnung ist bspw. eine Bohrung, ein Loch oder eine spezielle Haltevorrichtung.

Der Sensorträger ist, da er in beliebiger Orientierung bezüglich Drehungen um die Längsachse des Sensorträgers klemmbar ausgebildet ist, keine Mittel auf, die eine vordefinierte Orientierung des Sensorträgers in der Halteöffnung erzwingen würden. Daher ist die Montage des Sensorträgers ohne großen Aufwand, insbesondere ohne Justiertätigkeiten möglich.

Die Erfindung kommt ohne die eingangs genannte separate Klemmbuchse aus. Der Sensorträger bzw. Stab kann direkt mittels der integrierten Klemmmittel in die Halteöffnung gesteckt werden und klemmt dort selbsttätig fest. Die erfindungsgemäße Sensorvorrichtung, welche zusätzlich zum Sensorträger vorzugsweise noch ein Anschlusskabel aufweist, ist kostengünstig herzustellen sowie einfach und kostengünstig zu montieren. In bestehenden Systemen kann die bekannte Kombination aus Stabsensor und Klemmbuchse leicht und kostengünstig gegen die erfindungsgemäße Sensorvorrichtung ausgetauscht werden.

Gemäß bevorzugten Ausführungsformen ist der Sensorträger derart ausgebildet, dass der Sensorträger in der bekannten Halteöffnung geklemmt werden kann, die zur Aufnahme einer bekannten Klemmbuchse geeignet ist, die einen rundstabförmigen Sensor im Wesentlichen zylindrisch umschließt. In der Halteöffnung kann also ein zylindrischer bzw. rundstabförmiger Gegenstand geklemmt werden. Der in der Halteöffnung zu klemmende Sensorträger ist daher vorzugsweise, jedoch nicht zwangsläufig, ebenfalls rundstabförmig ausgebildet. Insbesondere ist der Sensorträger in Betrachtung ohne die Klemmmittel vorzugsweise im Wesentlichen rundstabförmig ausgebildet. Zusammen mit den fest integrierten Klemmmitteln ist der Sensorträger vorzugsweise zumindest annäherungsweise rundstabförmig ausgebildet.

Gemäß einer alternativen Ausführungsform weist der Sensorträger jedoch eine beliebige andere Form auf, die geeignet ist, um den Sensorträger axial verschiebbar in der Halteöffnung zu klemmen bzw. zu lagern. Beispielsweise ist der Sensorträger gemäß dieser alternativen Ausführungsform oval oder eckig bzw. mit einem ovalen oder eckigen Querschnitt senkrecht zu seiner Längsachse ausgebildet. Gemäß einer besonderen Ausführungsform weist der Sensorträger einen im Wesentlichen dreieckigen Querschnitt senkrecht zu seiner Längsachse, jedoch mit abgerundeten Ecken auf. Vorzugsweise brauchen bei beiden Ausführungsformen keine Änderungen an der bekannten Halteöffnung vorgesehen zu werden. Insbesondere kann der Sensorträger der erfindungsgemäßen Sensorvorrichtung in jede bekannte Halteöffnung gesteckt werden, die auch zur Aufnahme der bekannten Klemmbuchse geeignet ist.

Gemäß einer besonders bevorzugten Ausführungsform ragen Teile der Klemmmittel zumindest in dem Fall, dass der Sensorträger nicht geklemmt ist, teilweise radial über das Gehäuse des Sensorträgers hinaus. Der Sensorträger mit den Klemmmitteln ist dabei nicht als im Wesentlichen rundstabförmig, sondern allenfalls als lediglich annähernd rundstabförmig anzusehen oder weist eine andere Form, bspw. mit dem o. g. eckigen, insbesondere im Wesentlichen dreieckigen, oder ovalen Querschnitt, auf. Dank dieser Ausbildung der Klemmmittel können die Klemmmittel eine ausreichend große radial wirkende Vorspannung und damit eine ausreichend große axial wirkende Haftreibkraft bereitstellen.

Besonderes bevorzugt sind die Klemmmittel in dem Fall, dass der Sensorträger in der Halteöffnung geklemmt ist, überwiegend, insbesondere nahezu ausschließlich, innerhalb des Umfangs des Sensorträgers in Betrachtung ohne die Klemmmittel bzw. innerhalb einer gedachten Umhüllenden des Gehäuses angeordnet. Dies gilt vorzugsweise besonders bei einer im Wesentlichen rundstabförmigen Ausbildung des Sensorträgers in Betrachtung ohne die Klemmmittel. Der Sensorträger mit den integrierten Klemmmitteln ist in diesem Fall auch geklemmt im Wesentlichen rundstabförmig und kann daher vorteilhaft in einer entsprechenden, insbesondere zylindrischen, Halteöffnung geklemmt werden.

Aber auch bei einer anderen als im Wesentlichen rundstabförmigen Ausbildung des Sensorträgers, nämlich bspw. bei einer Ausbildung mit einem ovalen oder eckigen, insbesondere im Wesentlichen dreieckigen, Querschnitt des Sensorträgers, ist eine Ausbildung des Sensorträgers vorteilhaft, die auch ohne die Klemmmittel den Sensorträger in der Halteöffnung im Wesentlichen zentriert hält, so dass mit den Klemmmitteln ein ausreichend fester Sitz des Sensorträgers in der Halteöffnung begünstigt ist.

Gemäß einer bevorzugten Ausführungsform der Erfindung weisen die Klemmmittel wenigstens eine Klemmleiste, insbesondere genau eine, genau zwei, genau drei, genau vier oder mehr als vier Klemmleisten, auf, die sich in axialer Richtung bzw. parallel zur Längsachse bzw. Stabachse seitlich am Sensorträger erstreckt.. Es reicht aus, den Sensorträger mittels der Klemmleiste, insbesondere genau einer Klemmleiste, in der Halteöffnung festzuklemmen.

Die Klemmleiste weist hierzu vorzugsweise mehrere Federelemente auf, um einen definierten Reibschluss zwischen dem Sensorträger und der Halteöffnung in axialer Richtung des Sensorträgers zu bewirken bzw. um eine ausreichende Haftreibkraft bereitzustellen. Die Klemmleiste ist bevorzugt metallisch bzw. weist Metall auf. Alternativ weist die Klemmleiste ein anderes Material, bspw. Kunststoff, auf. Dank der Federelemente ist es möglich, den Sensorträger so fest in der Halteöffnung zu klemmen, dass der Sensorträger gegen ein unbeabsichtigtes Verrutschen gesichert ist. Zugleich ermöglichen die Federelemente, dass das Polrad beispielsweise in einer Kurvenfahrt den Sensorträger axial in der Halteöffnung zurückschieben kann, so dass der Sensorträger nicht beschädigt oder in seiner Funktion beeinträchtigt wird und nachfolgend wieder einen ausreichenden Abstand zum Polrad aufweist.

Gemäß einer vorteilhaften Weiterbildung weisen die Klemmmittel oder das Gehäuse zusätzlich wenigstens eine Kontaktleiste auf, die eine Kontaktfläche oder wenigstens zwei Kontaktpunkte bzw. Auflagepunkte zur Halteöffnung bereitstellt, wenn der Sensorträger in der Halteöffnung geklemmt ist. Im Gegensatz zur Klemmleiste weist die Kontaktleiste keine Federelemente auf. Bevorzugt ist die Kontaktleiste ansonsten jedoch gleich oder ähnlich wie die Klemmleiste ausgebildet und in den Sensorträger integriert.

Gemäß einer speziellen Ausführungsform weist der Sensorträger in einer ersten Variante wenigstens drei, insbesondere genau drei, Leisten aus einer die Klemmleisten und die Kontaktleisten umfassenden Gruppe auf, wobei diese Leisten parallel zur Längsachse des Sensorträgers und vorzugsweise äquidistant zueinander angeordnet sind. Insbesondere weisen die Klemmmittel wenigstens oder genau eine Klemmleiste und wenigstens oder genau zwei Kontaktleisten auf. Alternativ weisen die Klemmmittel gemäß der ersten Variante dieser speziellen Ausführungsform wenigstens oder genau zwei Klemmleisten und wenigstens oder genau eine Kontaktleiste auf. Mit minimalem Materialaufwand kann somit eine Zentrierung in der Halteöffnung erreicht werden.

Gemäß einer alternativen Variante dieser speziellen Ausführungsform weist der Sensorträger wenigstens vier, insbesondere genau vier, in axialer Richtung ausgerichtete und vorzugsweise äquidistant zueinander angeordnete Leisten auf, von denen vorzugsweise wenigstens zwei Leisten als Klemmleisten ausgebildet sind. Mit vier Leisten ist der Materialaufwand gegenüber drei Leisten zwar etwas höher. Jedoch ist damit eine vermehrte rechtwinklige Anordnung von Bauteilen, insbesondere auch relativ zu den Leisten, möglich. Dies führt zu fertigungstechnischen Vorteilen und damit wieder zu verminderten Kosten.
Gemäß einer bevorzugten Ausführungsform sind die Klemmleisten derart ausgebildet, dass die Federelemente beim Herstellen des Reibschlusses nach einer axialen Verschiebung des Sensorträgers in der Halteöffnung einer Umkehr dieser axialen Verschiebung selbsttätig entgegenwirken oder sogar diese axiale Verschiebung um einen Zusatzbeitrag ergänzen. Die Federelemente sorgen dafür, dass der Sensorträger, nachdem er vom Polrad in der Halteöffnung verschoben wurde, nicht wieder zurück schwingt, sondern an seiner erreichten Position gehalten wird oder beim Verzahnen der Federelemente mit der Halteöffnung bzw. beim Herstellen des Reibschlusses mittels dieser Federelemente sogar geringfügig weiter vom Polrad weggedrückt wird, so dass nachfolgend die Wahrscheinlichkeit eines Kontaktes mit dem Polrad vermindert ist. Insgesamt wird dadurch der Kontakt mit dem Polrad und somit ein Abschleifen des Sensorkopfes am Polrad minimiert.

Gemäß einer bevorzugten Ausführungsform der Erfindung ist der Sensorträger daher derart ausgebildet, dass einem abrasiven Verhalten am Sensorträger durch das Polrad entgegengewirkt wird. Alternativ oder zusätzlich kann dies durch eine geeignete Materialauswahl erfolgen, wobei der Sensorkopf beispielsweise metallisch ausgebildet ist oder metallische Teile aufweist, die gegenüber der ansonsten vorzugsweise überwiegend aus Kunststoff bestehenden Hülle des Sensorträgers ein geringeres abrasives Verhalten aufweisen.

Vorzugsweise setzen sich die Klemmleisten am Sensorkopf des Sensorträgers in Kopfabschnitten fort bzw. knicken radial in Richtung der Längsachse des Sensorträgers ab, so dass diese Kopfabschnitte einem abrasiven Verhalten am Sensorträger durch das Polrad entgegenwirken. Die Klemmmittel bzw. die Klemmleisten einschließlich der ggf. vorhandenen verbindenden Abschnitte bzw. Kopfabschnitte am Sensorkopf sind vorzugsweise metallisch ausgebildet. Alternativ bestehen die Klemmmittel bzw. die Klemmleisten aus Kunststoff oder einem anderen Material, das reversibel verformbar ist, bzw. aus einer anderen Materialmischung oder Materialkombination, die für die Klemmfunktion zumindest partiell reversibel verformbar ist.

Gemäß einer bevorzugten Ausführungsform weist die Sensorvorrichtung einen am Sensorkopf des Sensorträgers angeordneten aktiven Sensor zum aktiven Erfassen der Drehung des Polrades auf. Im Gegensatz zu einem passiven Sensor kann der aktive Sensor nicht ohne eine Hilfsspannung ein Signal erzeugen, sondern benötigt eine Versorgungsspannung bzw. Hilfsspannung. Dabei weist der aktive Sensor vorzugsweise passive Aufnehmer und eine Primärelektronik auf. Die Primärelektronik benötigt zur Auswertung der in Abhängigkeit von der Stellung des Polrades veränderbaren elektrischen Eigenschaften der passiven Aufnehmer die Hilfsspannung. Vorteilhafterweise ist der aktive Sensor ein Hall-Sensor bzw. Hall-Effekt-Sensor bzw. Hall-Differenz-Sensor zum Sensieren, insbesondere Abtasten, der Drehung des Polrades unter Nutzung des Hall-Effektes. Der Hall-Sensor ermöglicht eine berührungsfreie Messung über ein messbares Potentialgefälle, das sich in Abhängigkeit von der Position des Polrades relativ zum aktiven Sensor, insbesondere in Abhängigkeit davon, ob sich gerade ein Zahn des Polrades oder eine zwischen zwei Zähnen befindliche Lücke vor dem aktiven Sensor befindet, einstellt.

Gemäß einer alternativen Ausführungsform ist der aktive Sensor ein Magnetfeldsensor, insbesondere ein sog. GMR (giant magneto resistance)-Sensor bzw. Riesenmagnetowiderstand-Sensor. Der GMR-Sensor nutzt den sog. GMR-Effekt, der ein quantenmechanischer Effekt ist. Dabei bewirken Variationen des Magnetfeldes, die durch Positionsänderungen bzw. die Drehung des Polrades verursacht werden, messbare Änderungen des elektrischen Widerstandes einer hierfür vorgesehenen Struktur im aktiven Sensor.

Der aktive Sensor und somit der Sensorträger insgesamt ist vorzugsweise lageunabhängig in Bezug auf Drehungen um die Längsachse des Sensorträgers in der Halteöffnung klemmbar, so dass die Sensorvorrichtung ohne Justierarbeiten montiert und ohne Kalibriertätigkeiten in Betrieb genommen werden kann. Insbesondere ist der aktive Sensor derart ausgebildet, dass der aktive Sensor seine Orientierung bezüglich Drehungen um die Längsachse des Sensorträgers bzw. seine Orientierung relativ zum Polrad aus aufgenommenen Messwerten selbsttätig erkennt. Der aktive Sensor ist somit vorzugsweise ein lageunabhängiger Sensor, der keine Montage in einer vorbestimmten Orientierung erfordert.

Gemäß einer alternativen Ausführungsform weist die Sensorvorrichtung am Sensorkopf des Sensorträgers einen passiven Sensor zum passiven Erfassen der Drehung des Polrades auf. Die elektrische Funktion gleicht dabei der Funktion des bekannten passiven Stabsensors, der mittels einer Klemmbuchse in die Halteöffnung geklemmt werden kann. Somit unterstützt die Erfindung auch Bremsanlagen, welche lediglich Signale von passiven Sensoren auswerten.

Die erfindungsgemäße Bremsanlage weist mehrere Sensorvorrichtungen auf, von denen wenigstens eine Sensorvorrichtung erfindungsgemäß ausgebildet ist. Weiter weist die Bremsanlage mehrere Bremsen zum Abbremsen und/oder Feststellen von Rädern des Fahrzeugs auf. Ferner weist die Bremsanlage vorzugsweise eine mittels einer elektrischen Signalleitung oder Datenleitung mit den Sensorvorrichtungen verbundene Bremselektronik zur Steuerung und/oder Regelung der Bremsen unter Berücksichtigung von Signalen bzw. Daten der Sensorvorrichtungen auf.

Die Bremsanlage kann eine Mischbestückung von Sensorvorrichtungen aufweisen, wobei teilweise bekannte Sensorvorrichtungen und teilweise erfindungsgemäße Sensorvorrichtungen verwendet werden. Im Falle eines Defekts einer bekannten Sensorvorrichtung kann die Kombination aus Klemmbuchse und der defekten Sensorvorrichtung durch die erfindungsgemäße Sensorvorrichtung ohne Klemmbuchse ersetzt werden.

Das erfindungsgemäße Fahrzeug ist insbesondere ein Nutzfahrzeug und weist die erfindungsgemäße Sensorvorrichtung und/oder die Bremsanlage mit der erfindungsgemäßen Sensorvorrichtung auf. Ferner weist das Fahrzeug vorzugsweise mehrere Achsen, insbesondere wenigstens eine Vorderachse mit wenigstens einem Rad sowie wenigstens eine Hinterachse mit wenigstens einem Rad, auf. Im Bereich wenigstens eines dieser Räder ist in einer Halteöffnung der Sensorträger einer erfindungsgemäßen Sensorvorrichtung angeordnet.

Schließlich betrifft die Erfindung die Verwendung einer Sensorvorrichtung, insbesondere eines Stabsensors, zur Drehzahlmessung an einem Rad eines Fahrzeugs. Dabei ist die Sensorvorrichtung erfindungsgemäß ausgebildet und kann in einer erfindungsgemäßen Bremsanlage bzw. in einem erfindungsgemäßen Fahrzeug eingesetzt werden.

Weitere Ausführungsformen ergeben sich aus den Ansprüchen sowie aus dem anhand der Zeichnung näher erläuterten Ausführungsbeispiel.

In der Zeichnung zeigen:
- Fig. 1: eine Sensorvorrichtung gemäß einem Ausführungsbeispiel der Erfindung in vereinfachter schematischer Darstellung in einer Seitenansicht;
- Fig. 2: die Sensorvorrichtung des Ausführungsbeispiels gemäß Fig. 1 in vereinfachter schematischer Darstellung in einer Draufsicht in Richtung des Sensorkopfes und
- Fig. 3: die Sensorvorrichtung des Ausführungsbeispiels gemäß den Fig. 1 und 2 in vereinfachter schematischer Darstellung im Schnitt von der Seite.

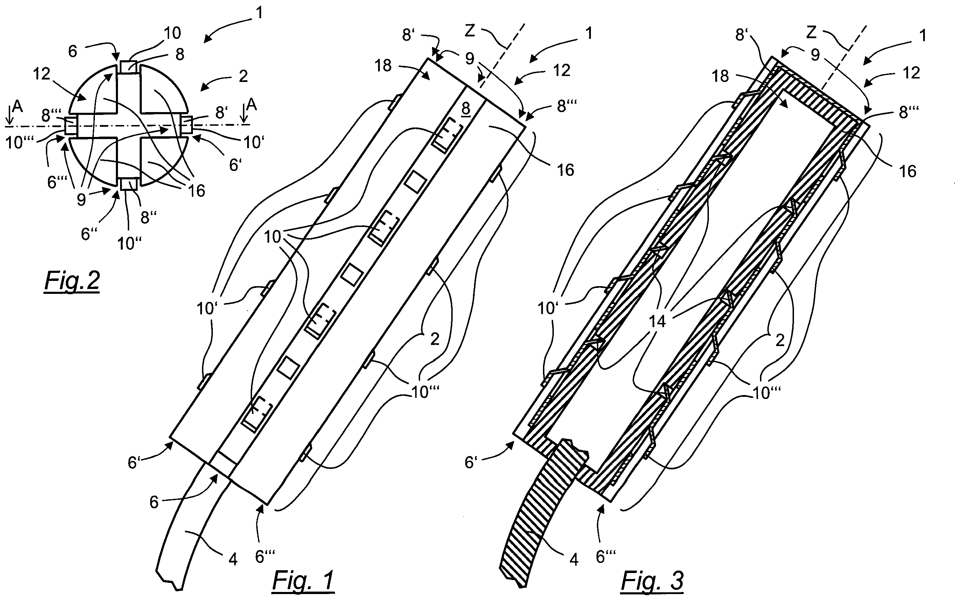

Fig. 1, Fig. 2 und Fig. 3 zeigen eine Sensorvorrichtung 1 gemäß einem Ausführungsbeispiel der Erfindung. Die Sensorvorrichtung 1 ist als Stabsensor ausgebildet, und zur Drehzahlmessung an einem Rad eines Fahrzeugs geeignet und vorgesehen. Fig. 1 zeigt dabei eine Seitenansicht, Fig. 2 eine Draufsicht und Fig. 3 einen Schnitt an einer in Fig. 2 gekennzeichneten Schnittebene A, in der eine Längsachse bzw. Stabachse Z verläuft.

Die Sensorvorrichtung 1 weist einen als Stab ausgebildeten Sensorträger 2 und ein Anschlusskabel 4 auf. Der Sensorträger 2 ist im Wesentlichen rundstabförmig ausgebildet, weist jedoch vier zur Längsachse bzw. Stabachse Z parallele Nuten 6, 6', 6" und 6"' auf, in denen Klemmleisten 8, 8', 8" und 8"' angeordnet sind. Die Klemmleisten 8, 8', 8" und 8"' sind Klemmmittel 9 oder Teile von Klemmmitteln 9, die zum Klemmen der Sensorvorrichtung 1 bzw. des Sensorträgers 2 in einer Halteöffnung im Bereich des Rades eines Fahrzeugs, insbesondere Nutzfahrzeugs, Federelemente 10, 10', 10" und 10"' aufweisen. Die Federelemente 10, 10', 10" und 10"' sind jeweils einteilig in der jeweiligen Klemmleiste 8, 8', 8" oder 8'" als ein metallischer Streifen ausgebildet, aus dem Teile als die Federelemente 10, 10', 10" und 10"' derart herausgebogen sind, dass sie über den Umfang des Sensorträgers 2 in Betrachtung ohne die Klemmmittel 9 herausragen. Zumindest die Federelemente 10' und 10'" sind gemäß diesem Ausführungsbeispiel über den Sensorkopf 12 des Sensorträgers 2 miteinander verbunden, insbesondere einteilig ausgebildet, wie aus den Fig. 2 und 3 ersichtlich ist. Die Federelemente 10 und 10" können ebenfalls miteinander verbunden sowie ggf. auch mit den Federelementen 10' und 10'" am Sensorkopf 12 verbunden sein.

Alternativ zum gezeigten Ausführungsbeispiel entfallen Verbindungen der Klemmleisten 8, 8', 8", 8'" über den Sensorkopf 12. Gemäß nicht gezeigten Ausführungsbeispielen einer erfindungsgemäßen Sensorvorrichtung weist deren Sensorträger weniger oder mehr als vier Klemmleisten, bspw. eine, zwei, drei, fünf oder sechs Klemmleisten sowie eine oder mehrere Kontaktleisten oder andersartig ausgebildete Klemmmittel und/oder Führungsmittel auf.

Ähnlich wie Abschnitte der Klemmleisten 8, 8', 8" und 8'" als Federelemente abgewinkelt ausgebildet sind, sind gemäß diesem Ausführungsbeispiel weitere Abschnitte vorgesehen, die in Richtung der Längsachse bzw. Stabachse Z abgewinkelte Haken 14 bilden und in Sacklöcher eines Gehäuses bzw. einer Hülle 16, insbesondere Kunststoffhülle, des Sensorträgers 2 hineinragen. Die Klemmleisten 8, 8', 8" und 8'" sind somit fest an der Hülle 16 des Sensorträgers 2 befestigt.

Gemäß alternativen Ausführungsbeispielen bilden die zur Befestigung am Gehäuse vorgesehenen weiteren Abschnitte der Klemmleisten 8, 8', 8" und 8'" keine Haken, sondern weisen eine beliebige andere Form auf, die dazu geeignet ist, die Klemmleisten 8, 8', 8" und 8'" am Gehäuse bzw. der Hülle 16 des Sensorträgers 2 zu fixieren und die Klemmmittel 9 somit in den Sensorträger 2 zu integrieren. Die Sacklöcher weisen im gezeigten Ausführungsbeispiel gerade Abschnitte auf, weisen gemäß alternativen Ausführungsbeispielen jedoch andersartige, bspw. konkave oder konvexe, Abschnitte auf, insbesondere um Vorsprünge zum Klemmen oder Verrasten der Haken 14 oder entsprechender weiterer Abschnitte der Klemmleisten 8, 8', 8" und 8'" zu bilden.

Alternativ zum gezeigten Ausführungsbeispiel entfallen die Haken 14 und/oder die Sacklöcher in der Hülle 16. Anstelle der Sacklöcher sind bspw. Vorsprünge vorgesehen, welche Löcher in den Klemmleisten 8, 8', 8" und 8'" ausfüllen und die Klemmleisten somit an der Hülle 16 fixieren. Alternativ oder zusätzlich sind die Klemmleisten 8, 8', 8" und 8'" an die Hülle 16 geklebt oder geschraubt oder durch spezielle Konturen, mittels denen bspw. ein Formschluss oder eine Verankerung oder eine Verkeilung mit der Hülle 16 hergestellt werden kann, oder auf andere Weise fest an der Hülle 16 befestigt und somit in den Sensorträger 2 integriert.

Am Sensorkopf 12 des Sensorträgers 2 ist ein Sensor 18 angeordnet, mit dem die Drehung bzw. jeweilige Position eines Polrades erfasst bzw. gemessen werden kann. Dieser Sensor 18 ist in einer Ausgestaltung als aktiver Sensor vorgesehen, mittels dem aktiv, d.h. unter Nutzung einer Hilfsspannung bzw. Versorgungsspannung, die Drehung bzw. jeweilige Position eines Polrades sensiert, insbesondere abgetastet, werden kann, wenn der Sensorträger 2 in einer geeignet vor diesem Polrad positionierten Halteöffnung geklemmt ist. Alternativ ist ein passiver Sensor vorgesehen. Der aktive Sensor 18 ist aufgrund seiner besonderen Ausbildung in der Lage, selbsttätig seine Orientierung relativ zur Drehbewegung des Polrades zu ermitteln. Daher kann der Sensorträger 2 mit dem aktiven Sensor 18 lageunabhängig in Bezug auf Drehungen um die Längsachse bzw. Stabachse Z und damit ohne aufwändige Justage und ohne nachfolgende manuelle Kalibrierung verbaut werden.

Aufgrund der besonderen Ausgestaltung der Sensorvorrichtung 1, insbesondere der Klemmleisten 8, 8', 8" und 8"', wird ein abrasives Verhalten der Sensorvorrichtung 1 durch Schleifen am Polrad verhindert oder im Vergleich zu bekannten Sensorvorrichtungen, die mittels einer Klemmbuchse geklemmt werden, zumindest verringert. Nach alledem stellt die Erfindung eine kostengünstig herstellbare, mit geringem Aufwand in einer Halteöffnung klemmbare und somit ohne großen Aufwand und kostengünstig montierbare Sensorvorrichtung zur Drehzahlmessung an einem Rad eines Fahrzeugs bereit.

## Patentansprüche

1. Sensorvorrichtung, insbesondere Stabsensor, zur Drehzahlmessung an einem Rad eines Fahrzeugs, wobei die Sensorvorrichtung (1) einen Sensorträger (2), insbesondere Stab, mit einem in den Sensorträger (2) integrierten Sensor (18) aufweist, um für die Drehzahlmessung die Drehung eines mit dem Rad mitdrehenden Polrades zu sensieren,
mit
in den Sensorträger (2) integrierten Klemmitteln (9), mittels denen der Sensorträger (2) für die Drehzahlmessung in einer Halteöffnung im Bereich des Rades axial verschiebbar und in beliebiger Orientierung bezüglich Drehungen um die Längsachse (Z) des Sensorträgers (2) klemmbar ist, wobei die Klemmmittel (9) wenigstens eine, insbesondere genau drei oder genau vier, sich in axialer Richtung seitlich am Sensorträger (2) erstreckende Klemmleiste (8, 8', 8", 8'") mit mehreren Federelementen (10, 10', 10", 10'") aufweist, um einen definierten Reibschluss zwischen dem Sensorträger (2) und der Halteöffnung in axialer Richtung des Sensorträgers (2) zu bewirken, wobei die Klemmleiste (8, 8',8", 8'") jeweils mehrere axial hintereinander angeordnete Federelemente (10, 10', 10", 10''') aufweist.

2. Sensorvorrichtung nach Anspruch 1,
**dadurch gekennzeichnet, dass**
Teile der Klemmmittel (9) in dem Fall, dass der Sensorträger (2) nicht geklemmt ist, teilweise radial über das Gehäuse (16) des Sensorträgers (2) hinausragen.

3. Sensorvorrichtung nach einem der vorherigen Ansprüche,
**dadurch gekennzeichnet, dass**
der Sensor (18) ein am Sensorkopf (12) des Sensorträgers (2) angeordneter aktiver Sensor (18) zum aktiven Erfassen der Drehung des Polrades ist.

4. Sensorvorrichtung nach einem der Ansprüche 1 bis 2,
**dadurch gekennzeichnet, dass**
der Sensor ein am Sensorkopf (12) des Sensorträgers (2) angeordneter passiver Sensor zum passiven Erfassen der Drehung des Polrades ist.

5. Bremsanlage für ein Fahrzeug, wobei die Bremsanlage mehrere Bremsen zum Abbremsen und/oder Feststellen von Rädern des Fahrzeugs aufweist, mehrere Sensorvorrichtungen (1) zur Drehzahlmessung an den Rädern aufweist, wobei wenigstens eine Sensorvorrichtung (1) nach einem der vorherigen Ansprüche ausgebildet ist, und eine mittels einer elektrischen Signalleitung oder Datenleitung mit den Sensorvorrichtungen (1) verbundene Bremselektronik zur Steuerung und/oder Regelung der Bremsen unter Berücksichtigung von Signalen der Sensorvorrichtungen (1) aufweist.

6. Fahrzeug mit einer Sensorvorrichtung nach einem der Ansprüche 1 bis 4 und/oder mit einer Bremsanlage nach Anspruch 5.

7. Verwendung einer Sensorvorrichtung (1), insbesondere Verwendung eines Stabsensors, zur Drehzahlmessung an einem Rad eines Fahrzeugs,
**dadurch gekennzeichnet, dass**
die Sensorvorrichtung (1) nach einem der Ansprüche 1 bis 4 ausgebildet ist oder die Sensorvorrichtung (1) in einer Ausbildung nach einem der Ansprüche 1 bis 4 zur Drehzahlmessung in einer Bremsanlage nach Anspruch 5 und/oder in einem Fahrzeug nach Anspruch 6 eingesetzt wird.

## Claims

1. Sensor device, in particular a rod sensor, for measuring the rotational speed on a wheel of a vehicle, wherein the sensor device (1) has a sensor carrier (2), in particular a rod, with a sensor (18) integrated in the sensor carrier (2), in order to sense, for the measurement of the rotational speed, the rotation of a pole wheel which rotates along with the wheel,
having
clamping means (9) which are integrated in the sensor carrier (2) and by means of which, for the measurement of the rotational speed, the sensor carrier (2) can be clamped in an axially displaceable fashion in a holding opening in the region of the wheel and can be clamped in any desired orientation with respect to rotations about the longitudinal axis (Z) of the sensor carrier (2), wherein the clamping means (9) have at least one, in particular precisely three or precisely four, clamping strips (8, 8', 8", 8"') which extend in the axial direction laterally on the sensor carrier (2) and have a plurality of spring elements (10, 10', 10", 10"'), in order to bring about a defined friction connection between the sensor carrier (2) and the holding opening in the axial direction of the sensor carrier (2), wherein the clamping strip (8, 8', 8", 8"') has in each case a plurality of spring elements (10, 10', 10", 10"') which are arranged axially one behind the other.

2. Sensor device according to Claim 1,
**characterized in that**
in the event of the sensor carrier (2) not being clamped, parts of the clamping means (9) project out partially radially beyond the housing (16) of the sensor carrier (2).

3. Sensor device according to one of the preceding claims,
**characterized in that**
the sensor (18) is an active sensor (18) which is arranged on the sensor head (12) of the sensor carrier (2) and has the purpose of actively detecting the rotation of the pole wheel.

4. Sensor device according to one of Claims 1 and 2,
**characterized in that**
the sensor is a passive sensor which is arranged on the sensor head (12) of the sensor carrier (2) and has the purpose of passively detecting the rotation of the pole wheel.

5. Brake system for a vehicle, wherein the brake system has a plurality of brakes for braking and/or securing wheels of the vehicle, a plurality of sensor devices (1) for measuring the rotational speed at the wheels, wherein at least one sensor device (1) is embodied according to one of the preceding claims, and has brake electronics which are connected to the sensor devices (1) by means of an electrical signal line or data line and have the purpose of performing open-loop and/or closed-loop control of the brakes while taking into account signals of the sensor devices (1).

6. Vehicle having a sensor device according to one of Claims 1 to 4 and/or having a brake system according to Claim 5.

7. Use of a sensor device (1), in particular use of a rod sensor, for measuring the rotational speed on a wheel of a vehicle, **characterized in that** the sensor device (1) is embodied according to one of Claims 1 to 4, or the sensor device (1) is used in an embodiment according to one of Claims 1 to 4 for measuring the rotational speed in a brake system according to Claim 5 and/or in a vehicle according to Claim 6.

## Revendications

1. Dispositif de détection, en particulier une sonde, servant à mesurer la vitesse de rotation d'une roue de véhicule, dans lequel le dispositif de détection (1) comporte un support de capteur (2), en particulier une tige, doté d'un capteur (18) intégré dans le support de capteur (2) pour détecter la rotation d'une roue polaire tournant avec la roue afin de mesurer la vitesse de rotation, comportant des moyens de serrage (9) intégrés dans le support de capteur (2) au moyen desquels le support de capteur (2), pour mesurer la vitesse de rotation, peut être déplacé axialement dans un orifice de retenue dans la zone de la roue et bloqué selon une orientation quelconque par rapport à des rotations sur l'axe longitudinal (Z) du support de capteur (2), dans lequel les moyens de serrage (9) comportent au moins une, en particulier exactement trois ou exactement quatre, barres de serrage (8, 8', 8", 8"') s'étendant dans la direction axiale latéralement sur le support de capteur (2) et dotées de plusieurs éléments de ressort (10, 10', 10", 10"') afin de provoquer une jonction par frottement définie entre le support de capteur (2) et l'orifice de retenue dans la direction axiale du support de capteur (2), dans lequel la barre de serrage (8, 8', 8", 8"') comporte respectivement plusieurs éléments de ressort (10, 10', 10", 10"') disposés axialement les uns derrière les autres.

2. Dispositif de détection selon la revendication 1, **caractérisé en ce que** des parties des moyens de serrage (9) dépassent en partie radialement du boîtier (16) du support de capteur (2) dans le cas où le support de capteur (2) n'est pas serré.

3. Dispositif de détection selon l'une des revendications précédentes, **caractérisé en ce que** le capteur (18) est un capteur actif (18) disposé sur la tête de capteur (12) du support de capteur (2) pour détecter de manière active la rotation de la roue polaire.

4. Dispositif de détection selon l'une des revendications 1 à 2, **caractérisé en ce que** le capteur est un capteur passif disposé sur la tête de capteur (12) du support de capteur (2) pour détecter de manière passive la rotation de la roue polaire.

5. Système de freinage pour véhicule, dans lequel le système de freinage comporte plusieurs freins pour le freinage et/ou le blocage de roues du véhicule, et comporte plusieurs dispositifs de détection (1) servant à mesurer la vitesse de rotation des roues, dans lequel au moins un dispositif de détection (1) est conçu selon l'une des revendications précédentes, et comporte une électronique de freinage reliée aux dispositifs de détection (1) au moyen d'une ligne de signal électrique ou d'une ligne de données pour commander et/ou réguler les freins en tenant compte de signaux des dispositifs de détection (1) .

6. Véhicule équipé d'un dispositif de détection selon l'une des revendications 1 à 4 et/ou d'un système de freinage selon la revendication 5.

7. Utilisation d'un dispositif de détection (1), en particulier utilisation d'une sonde, pour mesurer la vitesse de rotation d'une roue de véhicule,
**caractérisé en ce que** le dispositif de détection (1) est conçu selon l'une des revendications 1 à 4 ou **en ce que** le dispositif de détection (1) est utilisé dans une forme de réalisation selon l'une des revendications 1 à 4 pour mesurer la vitesse de rotation dans un système de freinage selon la revendication 5 et/ou dans un véhicule selon la revendication 6.
